(19) Europäisches Patentamt
European Patent Office
Office européen des brevets

(11) **EP 4 539 217 A1**

(12) **EUROPEAN PATENT APPLICATION**
published in accordance with Art. 153(4) EPC

(43) Date of publication:
**16.04.2025 Bulletin 2025/16**

(21) Application number: **23819803.0**

(22) Date of filing: **05.06.2023**

(51) International Patent Classification (IPC):
*H01M 50/178* (2021.01)    *H01M 50/105* (2021.01)
*H01M 50/121* (2021.01)    *H01M 50/131* (2021.01)
*H01M 50/184* (2021.01)    *H01M 50/193* (2021.01)
*H01M 50/197* (2021.01)

(52) Cooperative Patent Classification (CPC):
**H01M 50/105; H01M 50/121; H01M 50/131;**
**H01M 50/178; H01M 50/184; H01M 50/193;**
**H01M 50/197;** Y02E 60/10

(86) International application number:
**PCT/JP2023/020831**

(87) International publication number:
**WO 2023/238823 (14.12.2023 Gazette 2023/50)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **07.06.2022 JP 2022092318**

(71) Applicant: **Toppan Holdings Inc.**
**Tokyo 110-0016 (JP)**

(72) Inventors:
• **NAKANISHI, Shunsuke**
  **Tokyo 110-0016 (JP)**
• **MURAKI, Takuya**
  **Tokyo 110-0016 (JP)**
• **IMAMOTO, Junya**
  **Tokyo 110-0016 (JP)**

(74) Representative: **Hoffmann Eitle**
**Patent- und Rechtsanwälte PartmbB**
**Arabellastraße 30**
**81925 München (DE)**

(54) **TERMINAL FILM FOR POWER STORAGE DEVICE, AND POWER STORAGE DEVICE USING SAME**

(57)     An aspect of the present disclosure is a power storage device terminal film for covering an outer peripheral surface of part of a metal terminal constituting a power storage device, the power storage device terminal film containing polypropylene and polyethylene, wherein the terminal film has a first surface satisfying Formula (A1): $0.3 \leq a2/a1 \leq 6.2$ (A1), where $a1$ represents an absorption intensity at a wave number of $720\ cm^{-1}$ measured by attenuated total reflection infrared spectroscopy, and $a2$ represents an absorption intensity at a wave number of $841\ cm^{-1}$ measured by attenuated total reflection infrared spectroscopy.

FIG.3

EP 4 539 217 A1

**Description**

[Technical Field]

The present disclosure relates to a power storage device terminal film, and a power storage device using the power storage device terminal film.

[Background Art]

In recent years, due to increased demand for smaller mobile devices and effective use of energy generated from natural resources, lithium-ion secondary batteries (a type of power storage device) with higher voltage and high energy density are under research and development.

Packaging materials conventionally used for such lithium-ion secondary batteries are often metal cans. However, in order to meet the demand for application to thinner and more diverse products, bag-shaped packaging materials composed of a laminate of a metal layer (e.g., an aluminum foil) and a resin film are increasingly used due to low production cost.

A laminated lithium-ion secondary battery in which a battery body is housed and sealed in a packaging material includes a current output terminal referred to as a tab. The tab includes a metal terminal (may also be referred to as a "tab lead") that is connected to a negative or positive electrode of the battery body and extends toward the outside of the packaging material, and a terminal film (may also be referred to as a "tab sealant") that covers an outer peripheral surface of part of the metal terminal. The terminal film is normally sealed to the metal terminal (e.g., Patent Literature 1).

[Citation List]

[Patent Literature]

[PTL 1] JP 2022-008803 A

[Summary of the Invention]

[Technical Problem]

A high level of safety is required for lithium-ion secondary batteries. However, lithium-ion secondary batteries contain a combustible material and may be ignited. A lithium-ion secondary battery is ignited, for example, when a lithium-ion secondary battery is dropped, and an electrolyte solution of the battery leaks and causes corrosion of a peripheral member.

The adhesive film for a metal terminal disclosed in Patent Literature 1 has room for improvement in safety when dropped.

The present disclosure has been made in view of the problem of the conventional technique, and provides a terminal film capable of preventing leakage of electrolyte solution when dropped, and achieving a higher level of safety of a power storage device, and a power storage device using the terminal film.

[Solution to Problem]

An aspect of the present disclosure is a power storage device terminal film for covering an outer peripheral surface of part of a metal terminal constituting a power storage device, the power storage device terminal film containing polypropylene and polyethylene, wherein the terminal film has a first surface satisfying Formula (A1):

$$0.3 \leq a2/a1 \leq 6.2 \text{ (A1)},$$

where a1 represents an absorption intensity at a wave number of 720 $cm^{-1}$ measured by attenuated total reflection infrared spectroscopy, and a2 represents an absorption intensity at a wave number of 841 $cm^{-1}$ measured by attenuated total reflection infrared spectroscopy.

The first surface of the terminal film satisfies Formula (A1). Thus, the terminal film has high adhesion to a packaging material, and exhibits good sealability. This enables the terminal film to prevent leakage of electrolyte solution when dropped and achieve a higher level of safety of a power storage device. Furthermore, the terminal film tends to prevent deterioration of performance due to leakage of electrolyte solution when dropped.

Another aspect of the present disclosure is a power storage device terminal film for covering an outer peripheral surface of part of a metal terminal constituting a power storage device, the power storage device terminal film including: a first resin layer that contains polypropylene and polyethylene; a second resin layer that contains polypropylene; and an intermediate layer that contains polypropylene and is provided between the first resin layer and the second resin layer, wherein the first resin layer has, as one surface of the terminal film, a first surface satisfying Formula (A1):

$$0.3 \leq a2/a1 \leq 6.2 \ (A1),$$

where a1 represents an absorption intensity at a wave number of 720 cm$^{-1}$ measured by attenuated total reflection infrared spectroscopy, and a2 represents an absorption intensity at a wave number of 841 cm$^{-1}$ measured by attenuated total reflection infrared spectroscopy.

The first surface of the terminal film satisfies Formula (A1). Thus, the terminal film has high adhesion to a packaging material, and exhibits good sealability. This enables the terminal film to prevent leakage of electrolyte solution when dropped and achieve a higher level of safety of a power storage device.

In the aspect, the intermediate layer may satisfy Formula (B 1). In such a case, the terminal film tends to achieve an even higher level of safety.

$$1.0 \leq b2/b1 \leq 3.2 \ (B1)$$

[In Formula (B1), b1 represents an absorption intensity at a wave number of 720 cm$^{-1}$ measured by attenuated total reflection infrared spectroscopy, and b2 represents an absorption intensity at a wave number of 841 cm$^{-1}$ measured by attenuated total reflection infrared spectroscopy.]

In the aspect, the second resin layer may satisfy Formula (C1). In such a case, the terminal film tends to achieve an even higher level of safety.

$$1.0 \leq c2/c1 \leq 5.8 \ (C1)$$

[In Formula (C1), c1 represents an absorption intensity at a wave number of 720 cm$^{-1}$ measured by attenuated total reflection infrared spectroscopy, and c2 represents an absorption intensity at a wave number of 841 cm$^{-1}$ measured by attenuated total reflection infrared spectroscopy.]

In the aspect, the terminal film may contain a compatibilizer that has a portion compatible with the polypropylene and a portion compatible with the polyethylene. In such a case, the terminal film tends to have higher adhesion to a sealant layer of a packaging material.

In the aspect, the compatibilizer may be a block copolymer or a graft copolymer. In such a case, the terminal film tends to have a better compatibilization effect.

Still another aspect of the present disclosure is a power storage device including: a power storage device body; a metal terminal that is electrically connected to the power storage device body; a packaging material that holds the metal terminal and houses the power storage device body; and the power storage device terminal film that is disposed between the metal terminal and the packaging material so as to cover an outer peripheral surface of part of the metal terminal, wherein the packaging material includes a sealant layer that contains polypropylene, the terminal film is disposed so that the first surface is in contact with the sealant layer, and the sealant layer satisfies Formula (D1):

$$0.8 \leq d2/d1 \leq 8.5 \ (D1),$$

where d1 represents an absorption intensity at a wave number of 720 cm$^{-1}$ measured by attenuated total reflection infrared spectroscopy, and d2 represents an absorption intensity at a wave number of 841 cm$^{-1}$ measured by attenuated total reflection infrared spectroscopy.

[Advantageous Effects of the Invention]

The present disclosure provides a power storage device terminal film capable of preventing leakage of electrolyte solution when dropped and achieving a higher level of safety of a power storage device, and a power storage device using the power storage device terminal film.

[Brief Description of the Drawings]

Fig. 1 is a perspective view of a schematic configuration of a power storage device according to an embodiment of the present disclosure.

Fig. 2 is a cross-sectional view of an example of a cross section of the packaging material shown in Fig. 1.

Fig. 3 is a cross-sectional view of the terminal film and the metal terminal taken along line A-A in Fig. 1.

[Description of the Embodiments]

A preferred embodiment of the present disclosure will be described in detail below with reference to the drawings. In the drawings, the same or corresponding components are denoted by the same reference signs, and redundant description is omitted. Furthermore, dimensional ratios in the drawings are not limited to the ratios shown in the drawings.

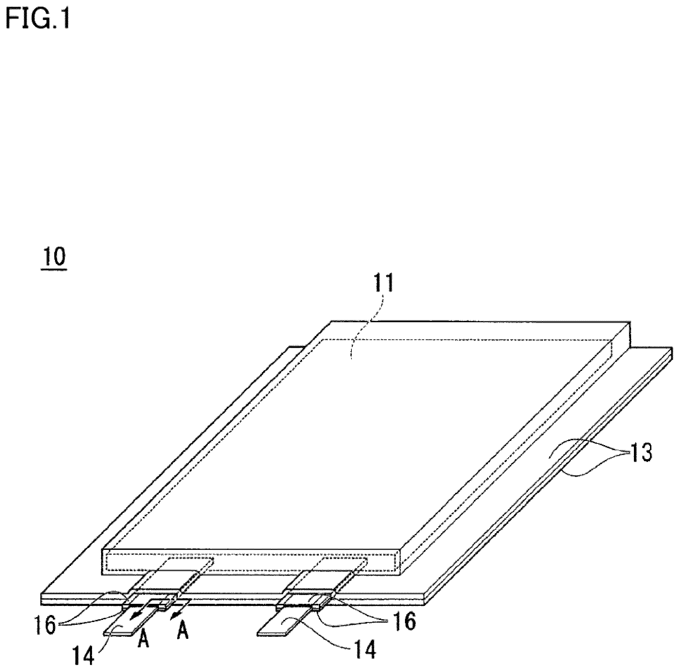

Fig. 1 is a perspective view of a schematic configuration of a power storage device according to an embodiment of the present disclosure. Fig. 1 shows a lithium-ion secondary battery as an example of a power storage device 10, and the power storage device 10 that is a lithium-ion secondary battery will be described below. The lithium-ion secondary battery configured as shown in Fig. 1 may be referred to as a battery pack or a battery cell.
The power storage device 10 shown in Fig. 1 is a lithium-ion secondary battery, and includes a power storage device body 11, a packaging material 13, a pair of metal terminals 14 (tab leads), and a power storage device terminal film 16 (tab sealant, hereinafter also referred to simply as a "terminal film 16").
The power storage device body 11 is a battery body that is charged and discharged. The packaging material 13 is disposed so as to cover the surface of the power storage device body 11 and be in contact with part of the terminal film 16.

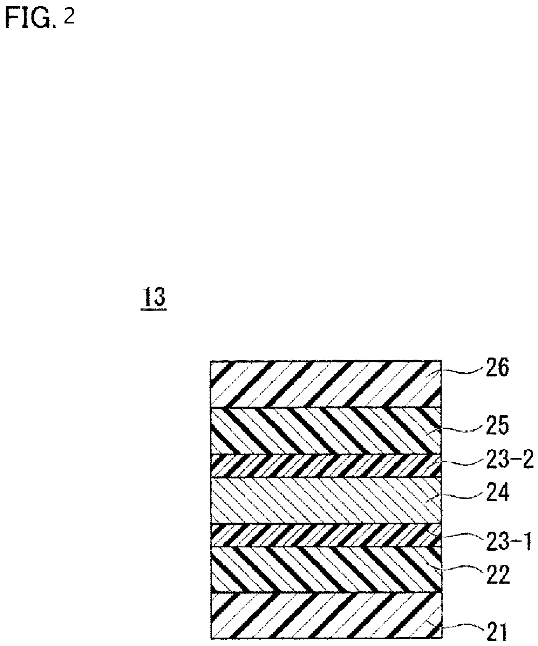

Fig. 2 is a cross-sectional view of an example of a cross section of the packaging material shown in Fig. 1. In Fig. 2, the same components as those of the structure shown in Fig. 1 are denoted by the same reference signs.
An example of a configuration of the packaging material 13 will be described with reference to Fig. 2. The packaging material 13 has a seven-layer structure in which from the inner side in contact with the power storage device body 11, an inner layer 21, an inner layer-side adhesive layer 22, an anti-corrosion treatment layer 23-1, a barrier layer 24 that is a metal layer, an anti-corrosion treatment layer 23-2, an outer layer-side adhesive layer 25, and an outer layer 26 are laminated in this order.
The inner layer 21 is a sealant layer that imparts heat sealability to the packaging material 13, and is heat sealed on the inner side during assembly of the power storage device 10. The base material of the inner layer (sealant layer) 21 may be, for example, a polyolefin resin, or an acid-modified polyolefin resin obtained by graft-modifying maleic anhydride or the like with a polyolefin resin. Examples of the polyolefin resin include low-density polyethylene, medium-density polyethylene, and high-density polyethylene; an ethylene-$\alpha$-olefin copolymer; homo polypropylene, block polypropylene, and random polypropylene; and a propylene-$\alpha$-olefin copolymer. Of these, the polyolefin resin preferably contains polypropylene. These polyolefin resins may be used singly or in combination of two or more.
When the inner layer 21 contains polypropylene and polyethylene, the total content of polypropylene and polyethylene with respect to the total amount of the inner layer 21 may be 50 mass% or more, 55 mass% or more, 60 mass% or more, or 65 mass% or more, and may be 100 mass% or less, 90 mass% or less, 80 mass% or less, or 70 mass% or less.
In the inner layer 21, the ratio of the mass of polypropylene (A) to the total mass of the polypropylene (A) and polyethylene (B) may be modified accordingly so that the inner layer 21 satisfies Formula (D1) (described later).
The inner layer 21 may satisfy Formula (D1) because in such a case, the packaging material 13 tends to prevent leakage of electrolyte solution when dropped and achieve an even higher level of safety of the power storage device. From the same viewpoint, in Formula (D1), d2/d1 is preferably 0.9 to 6.0, and more preferably 1.0 to 3.0.

$$0.8 \leq d2/d1 \leq 8.5 \ (D1),$$

where d1 represents an absorption intensity at a wave number of 720 cm$^{-1}$ measured by attenuated total reflection infrared spectroscopy, and d2 represents an absorption intensity at a wave number of 841 cm$^{-1}$ measured by attenuated total reflection infrared spectroscopy.
The inner layer 21 may be composed of a single-layer film or a multilayer film in which a plurality of layers are laminated, according to the required function. Specifically, for example, in order to obtain moisture resistance, the inner layer 21 may be composed of a multilayer film in which a resin such as ethylene-cyclic olefin copolymer or polymethylpentene is interposed. In addition, the inner layer 21 may contain, for example, various additives (e.g., a flame retardant, a slip agent, an anti-blocking agent, an antioxidant, a light stabilizer, a tackifier, and the like).

The thickness of the inner layer 21 is preferably set, for example, in the range of 10 to 150 $\mu$m, and more preferably in the range of 30 to 80 $\mu$m. The inner layer 21 having a thickness of less than 10 $\mu$m may cause lower heat seal adhesion between portions of the packaging material 13 and lower adhesion to the terminal film 16. The inner layer 21 having a thickness of more than 150 $\mu$m may lead to higher cost of the packaging material 13, and thus is not preferable.

The inner layer-side adhesive layer 22 may be made of, for example, a known adhesive appropriately selected, such as a typical adhesive for dry lamination or an acid-modified heat-sealing resin.

As shown in Fig. 2, the packaging material 13 preferably includes the anti-corrosion treatment layers 23-1 and 23-2 on the respective surfaces of the barrier layer 24 in terms of performance. However, considering cost, the packaging material 13 may include the anti-corrosion treatment layer 23-1 only on the surface of the barrier layer 24 facing the inner layer-side adhesive layer 22.

The barrier layer 24 may be, for example, a metal layer having conductivity. The material of the barrier layer 24 may be, for example, aluminum, stainless steel, or the like, and is preferably aluminum from the viewpoint of cost, mass (density), and the like.

The outer layer-side adhesive layer 25 may be made of, for example, a typical polyurethane adhesive containing polyester polyol, polyether polyol, acrylic polyol, or the like as a base resin.

The outer layer 26 may be composed of, for example, a single-layer film or a multilayer film made of nylon, polyethylene terephthalate (PET), or the like. As with the inner layer 21, the outer layer 26 may contain, for example, various additives (e.g., a flame retardant, a slip agent, an anti-blocking agent, an antioxidant, a light stabilizer, a tackifier, and the like). Furthermore, for example, as a measure against fluid leakage, the outer layer 26 may include a protective layer formed by lamination with a resin insoluble in an electrolyte solution or by coating with a resin component insoluble in an electrolyte solution.

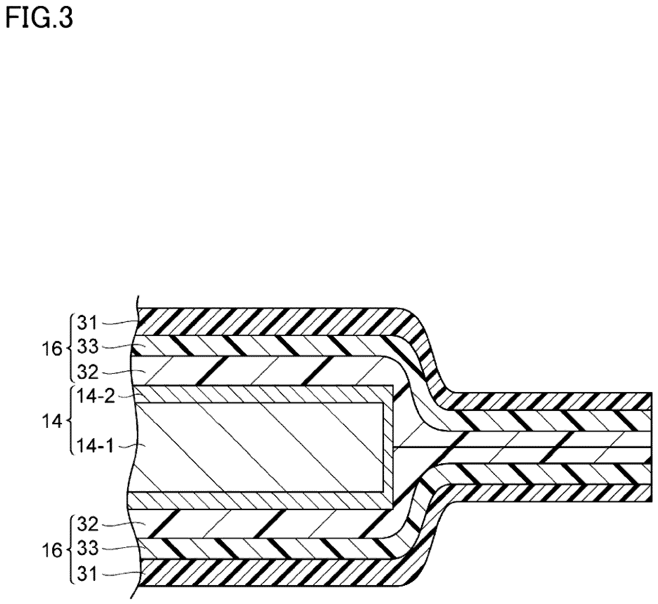

Fig. 3 is a cross-sectional view of the terminal film and the metal terminal taken along line A-A in Fig. 1. In Fig. 3, the same components as those of the structure shown in Fig. 1 are denoted by the same reference signs.

As shown in Figs. 1 and 3, the pair of (two in Fig. 1) metal terminals 14 each include a metal terminal body 14-1 and an anti-corrosion layer 14-2. One of the pair of metal terminal bodies 14-1 is electrically connected to a positive electrode of the power storage device body 11, and the other metal terminal body 14-1 is electrically connected to a negative electrode of the power storage device body 11. The pair of metal terminal bodies 14-1 extend in a direction away from the power storage device body 11, and are partially exposed from the packaging material 13. The pair of metal terminal bodies 14-1 may each have, for example, a flat plate shape.

The material of the metal terminal bodies 14-1 may be a metal. The metal used as the material of the metal terminal bodies 14-1 is preferably determined considering the structure of the power storage device body 11, the materials of the components of the power storage device body 11, and the like.

For example, when the power storage device 10 is a lithium-ion secondary battery, aluminum is used as a positive electrode current collector, and copper is used as a negative electrode current collector. In this case, the material of the metal terminal body 14-1 connected to the positive electrode of the power storage device body 11 is preferably aluminum. Considering corrosion resistance to an electrolyte solution, the material of the metal terminal body 14-1 connected to the positive electrode of the power storage device body 11 is preferably, for example, an aluminum material having a purity of 97% or more, such as 1N30. Furthermore, when the metal terminal body 14-1 is bent, the material of the metal terminal body 14-1 is preferably a metal material sufficiently annealed and tempered to obtain flexibility. The material of the metal terminal body 14-1 connected to the negative terminal of the power storage device body 11 is preferably copper provided with a nickel plating layer on the surface, or nickel.

The thickness of the metal terminal bodies 14-1 depends on the size and capacity of the lithium-ion secondary battery. When the power storage device 10 is a small-sized lithium-ion secondary battery, the thickness of the metal terminal bodies 14-1 is preferably, for example, 50 $\mu$m or more. When the power storage device 10 is a large-sized lithium-ion secondary battery for power storage or in-vehicle use or the like, the thickness of the metal terminal bodies 14-1 can be appropriately set, for example, in the range of 100 to 500 $\mu$m.

The anti-corrosion layer 14-2 is disposed so as to cover the surface of the metal terminal body 14-1. In the power storage device 10 as a lithium-ion secondary battery, an electrolyte solution contains a corrosive component such as $LiPF_6$. The anti-corrosion layer 14-2 is a layer for preventing corrosion of the metal terminal body 14-1 by the corrosive component such as $LiPF_6$ contained in the electrolyte solution.

As shown in Fig. 3, the terminal film 16 is disposed so as to cover the outer peripheral surface of part of the metal terminal 14. In the present embodiment, the terminal film 16 has a configuration in which a first resin layer 31 that is in contact with the packaging material 13, a second resin layer 32 that is in contact with the outer peripheral surface of the metal terminal 14, and an intermediate layer 33 that is disposed between the first resin layer 31 and the second resin layer 32 are laminated.

The first resin layer 31 is sealed to the packaging material 13 to seal the inside of the packaging material 13. The second resin layer 32 is disposed so as to cover the outer peripheral surface of the metal terminal 14 to seal the metal terminal 14 in the circumferential direction and adhere the terminal film 16 to the metal terminal 14.

In the present embodiment, the first resin layer 31 and the second resin layer 32 contain polypropylene (A) (hereinafter also referred to as "component (A)"), and polyethylene (B) (hereinafter also referred to as "component (B)"). As described later, the intermediate layer 33 contains polypropylene. That is, the terminal film 16 is a film having a mono-material structure using the same material. Thus, the terminal film 16 has good recyclability.

The first resin layer 31 and the second resin layer 32 may further contain a compatibilizer (C) (hereinafter also referred to as "component (C)") that has a portion compatible with the polypropylene (A) and a portion compatible with the polyethylene (B).

The polypropylene (A) may be homo polypropylene, random polypropylene, block polypropylene, or the like. Of these, random polypropylene having a melting point of 110 to 150°C is preferable from the viewpoint of openability and impact resistance under high temperature environmental conditions.

The polypropylene (A) may contain modified polypropylene having a polar group. The polypropylene (A) having a polar group achieves even higher adhesion between the second resin layer 32 and the metal terminal 14. Examples of the polar group include a hydroxyl group, a glycidyl group, an amide group, an imino group, an oxazoline group, an acid anhydride group, a carboxyl group, and an ester group. The polar group is preferably an acid anhydride group (particularly, a group derived from maleic anhydride) from the viewpoint of reactivity. The modified polypropylene may be an acid-modified polypropylene obtained by graft-modifying maleic anhydride or the like. Specific product examples of the modified polypropylene include "Admer" manufactured by Mitsui Chemicals, Inc., "Modic" manufactured by Mitsubishi Chemical Corporation, "Toyo-Tac" manufactured by Toyobo Co., Ltd., and "Umex Sanstac" manufactured by Sanyo Chemical Industries, Ltd. These types of polypropylene (A) can be used singly or in combination of two or more.

The melting point of the polypropylene (A) is preferably 110 to 165°C, and more preferably 120 to 150°C. When the melting point of the polypropylene (A) is 165°C or lower, it is possible to prevent the terminal film 16 from having poor openability under high temperature environmental conditions, and when the melting point is 110°C or higher, it is possible to allow the terminal film 16 to have even higher sealing strength at a temperature (e.g., 100°C) below the target opening temperature (e.g., 130°C), thus enabling appropriate control of the opening temperature.

Examples of the polyethylene (B) include very low-density polyethylene (VLDPE), low-density polyethylene (LDPE), linear low-density polyethylene (LLDPE), medium-density polyethylene (MDPE), and high-density polyethylene (HDPE). Of these, LDPE and LLDPE are preferable from the viewpoint of even better heat sealability and heat-sealing strength.

The polyethylene (B) may contain modified polyethylene having a polar group. The polyethylene (B) having a polar group achieves even higher adhesion between the second resin layer 32 and the metal terminal 14. Examples of the polar group include a hydroxyl group, a glycidyl group, an amide group, an imino group, an oxazoline group, an acid anhydride group, a carboxyl group, and an ester group. The polar group is preferably an acid anhydride group (particularly, a group derived from maleic anhydride) from the viewpoint of reactivity. The modified polyethylene may be an acid-modified polyethylene obtained by graft-modifying maleic anhydride or the like. Specific product examples of the modified polyethylene include "Admer" manufactured by Mitsui Chemicals, Inc., and "Modic" manufactured by Mitsubishi Chemical Corporation. These types of polyethylene (B) can be used singly or in combination of two or more.

The melting point of the polyethylene (B) is preferably 80 to 135°C, and more preferably 100 to 125°C. When the melting point of the polyethylene (B) is 135°C or lower, it is possible to allow the terminal film 16 to have even better openability under high temperature environmental conditions, and when the melting point of the polyethylene (B) is 80°C or higher, it is possible to prevent the terminal film 16 from being opened during production of the power storage device.

In the present specification, the melting point of a resin can be determined by performing measurement using a differential scanning calorimeter (DSC), and obtaining the peak temperature of the peak top, of a main peak, with the highest heat of solution.

The compatibilizer (C) has a portion compatible with the polypropylene (A) and a portion compatible with the polyethylene (B). The compatibilizer (C) improves the adhesion between the second resin layer 32 and the packaging material 13. Furthermore, the compatibilizer (C) also improves the adhesion strength of the sea-island interface between the polypropylene (A) and the polyethylene (B).

Examples of the compatibilizer (C) include ethylene-propylene rubber (EPR), ethylene-propylene-diene rubber (EPDM), and a block copolymer having a portion compatible with the polypropylene (A) and a portion compatible with the polyethylene (B), and a graft copolymer having a portion compatible with the polypropylene (A) and a portion compatible with the polyethylene (B).

Examples of the block copolymer include a block copolymer composed of a crystalline polyethylene unit and an ethylene-butylene copolymer unit, a block copolymer composed of a polyethylene unit and an ethylene-1-octene copolymer unit, and a block copolymer composed of a polypropylene unit and a polyethylene unit. Examples of the graft copolymer include a graft copolymer in which a polyethylene unit is grafted to polypropylene. The units constituting the above copolymers may be a crystalline unit or an amorphous unit.

The compatibilizer (C) is preferably a block copolymer or a graft copolymer from the viewpoint of compatibility, and preferably has an amorphous unit from the viewpoint of openability. These types of compatibilizers (C) can be used singly or in combination of two or more.

In the compatibilizer (C), the content ratio between the portion compatible with the polypropylene (A) and the portion compatible with the polyethylene (B) (mass ratio of portion compatible with the polypropylene (A)/portion compatible with the polyethylene) is preferably 1/9 to 9/1, more preferably 2/8 to 8/2, and even more preferably 3/7 to 7/3. When the content ratio is 1/9 or more, it is possible to achieve even higher adhesion strength between the terminal film and the sealant layer of the packaging material via the compatibilizer (C). On the other hand, when the content ratio is 9/1 or less, it is possible to achieve even higher adhesion strength between the compatibilizer (C) and the polyethylene (B).

The first resin layer 31 and the second resin layer 32 may contain a resin having a polar group. The resin having a polar group may be one of the components (A) to (C), or may be a resin (D) having a polar group (hereinafter also referred to as "polar resin") that is a component different from the components (A) to (C). The addition of the polar resin (D) is effective when none of the components (A) to (C) has a polar group; however, the polar resin (D) may be further added when one or more of the components (A) to (C) have a polar group.

Examples of the polar group of the polar resin (D) include a hydroxyl group, a glycidyl group, an amide group, an imino group, an oxazoline group, an acid anhydride group, a carboxyl group, and an ester group. The polar group is preferably an acid anhydride group (particularly, a group derived from maleic anhydride) from the viewpoint of reactivity. More preferably, the polar resin (D) has a portion partially compatible with the polyethylene (B).

The polar resin (D) different from the components (A) to (C) is not particularly limited, and may be, for example, a copolymer of an olefin such as ethylene or propylene and another monomer copolymerizable with the olefin. For example, a monomer having a polar group can be used as the other monomer to obtain a resin having a polar group. Examples of the polar resin (D) include an ethylene/acrylic acid/glycidyl methacrylate copolymer and a polyhydroxy polyolefin oligomer. These types of polar resins (D) can be used singly or in combination of two or more.

The total content of the polypropylene (A) and the polyethylene (B) with respect to the total amount of each of the layers may be 50 mass% or more, 60 mass% or more, 70 mass% or more, or 80 mass% or more, and may be 100 mass% or less, 97.5 mass% or less, 95 mass% or less, or 92.5 mass% or less.

In the first resin layer 31, the ratio of the mass of the polypropylene (A) to the total mass of the polypropylene (A) and the polyethylene (B) may be modified accordingly so that the first resin layer 31 satisfies Formula (A1) (described later). In the second resin layer 32, the ratio of the mass of the polypropylene (A) to the total mass of the polypropylene (A) and the polyethylene (B) may be modified accordingly so that the second resin layer 32 satisfies Formula (C1) (described later).

In the first resin layer 31, the ratio of the mass of the compatibilizer (C) to the total mass of the components (A) to (C) may be modified accordingly so that the first resin layer 31 satisfies Formula (A1) (described later). In the second resin layer 32, the ratio of the mass of the compatibilizer (C) to the total mass of the components (A) to (C) may be modified accordingly so that the second resin layer 32 satisfies Formula (C1) (described later).

When the first resin layer 31 and/or the second resin layer 32 contains the polar resin (D), the content of the polar resin (D) with respect to the total amount of each of the layers is preferably 1 to 20 mass%, and more preferably 5 to 15 mass%. When the content of the polar resin (D) is 1 mass% or more, the terminal film 16 tends to have even higher adhesion to the metal terminal under room temperature environmental conditions, and when the content of the polar resin (D) is 20 mass% or less, the terminal film 16 tends to be less likely to have poor openability under high temperature environmental conditions or lower adhesion to the packaging material under room temperature environmental conditions.

In the first resin layer 31 and the second resin layer 32, when one or more of the components (A) to (C) are a resin having a polar group, the ratio of the resin having a polar group to the total amount of the components (A) to (C) is preferably 40 mass% or more, and more preferably 80 mass% or more, from the viewpoint of even higher adhesion to the metal terminal under room temperature environmental conditions.

The first resin layer 31 and the second resin layer 32 may contain an additive other than the components described above. Examples of the additive include an antioxidant, a slip agent, a flame retardant, an anti-blocking agent, a light stabilizer, a dehydrating agent, a tackifier, and a crystal nucleating agent. These can be used singly or in combination of two or more.

The first resin layer 31 has, as one surface of the terminal film 16, a first surface satisfying Formula (A1). In Formula (A1), a2/a1 is preferably 0.5 to 4.5, and more preferably 0.8 to 2.5, because in such a case, the terminal film 16 tends to prevent leakage of electrolyte solution when dropped and achieve an even higher level of safety of the power storage device. In Formula (A1), a1 is the absorption intensity derived from the polyethylene (B). The same applies to b1 in Formula (B1), c1 in Formula (C1), and d1 in Formula (D1) described later. In Formula (A1), a2 is the absorption intensity derived from the polypropylene (A). The same applies to b2 in Formula (B1), c2 in Formula (C1), and d2 in Formula (D1) described later.

$$0.3 \leq a2/a1 \leq 6.2 \ (A1),$$

where a1 represents an absorption intensity at a wave number of 720 cm$^{-1}$ measured by attenuated total reflection infrared spectroscopy, and a2 represents an absorption intensity at a wave number of 841 cm$^{-1}$ measured by attenuated total reflection infrared spectroscopy.

The second resin layer 32 satisfies Formula (C1). Thus, the terminal film 16 tends to prevent leakage of electrolyte solution when dropped and achieve an even higher level of safety of the power storage device. From the same viewpoint, in Formula (C1), c2/c1 is preferably 1.5 to 4.0, and more preferably 2.0 to 3.0.

$$1.0 \leq c2/c1 \leq 5.8 \ (C1)$$

[In Formula (C1), c1 represents an absorption intensity at a wave number of 720 cm$^{-1}$ measured by attenuated total reflection infrared spectroscopy, and c2 represents an absorption intensity at a wave number of 841 cm$^{-1}$ measured by attenuated total reflection infrared spectroscopy.]

The thickness of the first resin layer 31 and the second resin layer 32 is preferably 10 to 100 μm, and more preferably 15 to 50 μm. The first resin layer 31 and the second resin layer 32 having a thickness of less than 10 μm may cause lower adhesion to the metal terminal 14. The second resin layer 32 having a thickness of more than 100 μm may lead to higher cost of the terminal film 16, and thus is not preferable.

The intermediate layer 33 is disposed between the first resin layer 31 and the second resin layer 32. One surface of the intermediate layer 33 is covered by the first resin layer 31, and the other surface of the intermediate layer 33 is covered by the second resin layer 32. The intermediate layer 33 contains polypropylene. The intermediate layer 33 containing polypropylene tends to allow the terminal film 16 to have good film formability, interlayer adhesion, impact resistance, and the like.

The intermediate layer 33 is preferably an insulating layer. The insulating layer is a layer for preventing a situation in which the sealant (the sealant layer of the packaging material and the first and second resin layers of the terminal film) flows out during heat sealing, and causes the metal layer of the packaging material and the metal terminal to be exposed and brought into contact with each other, leading to deterioration of insulation. Thus, the insulating layer is preferably made of a resin that has a high melting point or glass transition temperature and does not flow out during heat sealing.

The insulating layer contains polypropylene. The resin constituting the insulating layer other than polypropylene may be, for example, polyethylene terephthalate, polyethylene naphthalate, polyphenylene sulfide, polymethylpentene, polyacetal, cyclic polyolefin, polyamide, polycarbonate, polyphenylene ether, or polyethylene. The insulating layer may contain the same type of polyethylene and polypropylene as those of the first resin layer and the second resin layer. The polypropylene is preferably block polypropylene. When the insulating layer contains polypropylene, the compatibilizer (C) contained in the first resin layer 31 and the second resin layer 32 improves not only the adhesion to the packaging material but also the adhesion to the insulating layer. The resins constituting the insulating layer can be used singly or in combination of two or more.

The insulating layer may be colored by adding a pigment to the insulating layer. The colored insulating layer enables the terminal film 16 to have better visibility. This allows a more accurate examination of the terminal film 16 (specifically, for example, examination of whether the terminal film 16 is attached to the metal terminal 14, examination of the attachment position of the terminal film 16 with respect to the metal terminal 14, or the like). Examples of the pigment include copper oxide, cobalt oxide, zinc oxide, titanium oxide, carbon black, barium sulfate, a quinacridone pigment, a polyazo pigment, and an isoindolinone pigment.

The intermediate layer 33 satisfies Formula (B1). Thus, the terminal film 16 tends to prevent leakage of electrolyte solution when dropped and achieve an even higher level of safety of the power storage device. From the same viewpoint, in Formula (B1), b2/b1 is preferably 1.5 to 3.0, and more preferably 1.8 to 2.5.

$$1.0 \leq b2/b1 \leq 3.2 \ (B1)$$

[In Formula (B1), b1 represents an absorption intensity at a wave number of 720 cm$^{-1}$ measured by attenuated total reflection infrared spectroscopy, and b2 represents an absorption intensity at a wave number of 841 cm$^{-1}$ measured by attenuated total reflection infrared spectroscopy.]

The weight average molecular weight of the intermediate layer 33 may be $1.0 \times 10^5$ to $5.0 \times 10^6$, and is preferably $5.0 \times 10^5$ to $2.0 \times 10^6$, and more preferably $6.0 \times 10^5$ to $1.0 \times 10^6$. The intermediate layer 33 having a weight average molecular weight of $1.0 \times 10^5$ or more tends to have even better insulating properties. The intermediate layer 33 having a weight average molecular weight of $5.0 \times 10^6$ or less tends to be easily processed. The weight average molecular weight is a value measured by gel permeation chromatography (GPC).

The intermediate layer 33 may be a layer having a configuration other than that of the insulating layer described above. The intermediate layer 33 may be, for example, a layer satisfying the requirement of one or more of a layer (crosslinked layer) containing a resin having a crosslinked structure and a layer (reinforcing layer) containing at least one selected from the group consisting of a filler and fibers.

Examples of the resin having a crosslinked structure of the crosslinked layer include crosslinked acrylic resin, epoxy resin, phenol resin, urea resin, melamine resin, and polyurethane resin. These can be used singly or in combination of two or more.

Examples of the filler of the reinforcing layer include silica particles, alumina particles, barium sulfate particles, and calcium carbonate particles. These can be used singly or in combination of two or more. The average particle size of the filler is preferably 0.1 to 10 $\mu$m, and the content of the filler with respect to the total amount of the reinforcing layer (intermediate layer 33) is preferably 0.5 to 20 mass%.

Examples of the fibers of the reinforcing layer include fibers made of a cellulose resin, and fibers made of a resin that is used in the heat-resistant layer and has a melting point of 200°C or higher. These can be used singly or in combination of two or more. The fiber width of the fibers is preferably 10 nm to 10 $\mu$m, and the content of the fibers with respect to the total amount of the reinforcing layer (intermediate layer 33) is preferably 0.5 to 70 mass%. The fibers may form a nonwoven fabric.

The reinforcing layer may be a layer in which the above filler and/or fibers are dispersed in the polyolefin resin, the resin having a melting point of 200°C or higher, the resin having a crosslinked structure, or the like.

The intermediate layer 33 may not necessarily have a single-layer structure, and may have, for example, a multilayer structure in which a plurality of resin layers are adhered to each other via an adhesive or the like. Thus, the intermediate layer 33 may have a multilayer structure composed of two or more of the insulating layer, the crosslinked layer, and the reinforcing layer.

The thickness of the intermediate layer 33 (the entire thickness in the case of the intermediate layer 33 having a multilayer structure) can be appropriately set, for example, in the range of 10 to 200 $\mu$m, and is preferably 20 to 100 $\mu$m. It is important to find a balance between the thickness of the intermediate layer 33 and the thickness of the metal terminal 14 and the second resin layer 32. Thus, when the second resin layer 32 and the metal terminal 14 have a large thickness, the intermediate layer 33 may have a large thickness accordingly.

The total thickness of the first resin layer 31, the second resin layer 32, and the intermediate layer 33 (the thickness of the terminal film 16) is preferably 10 to 500 $\mu$m, more preferably 15 to 300 $\mu$m, and even more preferably 30 to 200 $\mu$m, from the viewpoint of heat sealability, and embedding properties and insulating properties of the metal terminal.

When the intermediate layer 33 is an insulating layer, the ratio of the thicknesses of the first resin layer 31, the intermediate layer 33, and the second resin layer 32 (the first resin layer 31 : the intermediate layer 33 : the second resin layer 32) may be set to, for example, 2 : 1 : 2, 1 : 2 : 1, 1 : 1 : 1, or the like so that the first resin layer 31 and the second resin layer 32 have the same thickness, or may be set to 1 : 1 : 3, 1 : 2 : 2, or 3 : 3 : 5 so that the second resin layer 32 in contact with the metal terminal has a larger thickness than the first resin layer 31, from the viewpoint of embedding properties of the metal terminal.

When the first resin layer 31 and the second resin layer 32 have the same thickness, the ratio of the thickness of the first resin layer 31 or the second resin layer 32 to the thickness of the intermediate layer 33 (the first resin layer 31 or the second resin layer 32 : the intermediate layer 33) may be 1 : 3 to 3 : 1, or 1 : 2 to 2 : 1. When the second resin layer 32 has a larger thickness than the first resin layer 31, the ratio of the thickness of the second resin layer 32 to the thickness of the intermediate layer 33 (the second resin layer 32 : the intermediate layer 33) may be 4 : 1 to 1 : 1, or 3 : 1 to 1 : 1, and the ratio of the thickness of the first resin layer 31 to the thickness of the intermediate layer 33 (the first resin layer 31 : the intermediate layer 33) may be 1 : 3 to 3 : 1, or 1 : 2 to 2 : 1.

While a preferred embodiment of the present disclosure has been described in detail above, the present disclosure is not limited to this specific embodiment, and various alterations and modifications can be made within the scope of the present disclosure defined in the appended claims.

For example, in the example shown in Fig. 3, the terminal film 16 has a three-layer structure; however, a second intermediate layer made of an insulating resin or the like may be disposed between the intermediate layer 33 and the first resin layer 31 and between the intermediate layer 33 and the second resin layer 32.

In this way, when the terminal film 16 has a multilayer structure of four or more layers, including a second intermediate layer between the intermediate layer 33 and the first resin layer 31, between the intermediate layer 33 and the second resin layer 32, the terminal film 16 achieves better insulating properties between the intermediate layer 33 and the barrier layer 24 (metal layer) constituting the packaging material 13 and better insulating properties between the intermediate layer 33 and the metal terminal 14. The second intermediate layers may be each the crosslinked layer or the reinforced layer described above.

The terminal film 16 may be composed of one layer or two layers.

When the terminal film 16 has a one-layer (single-layer) structure, the one layer may have the same configuration as the first resin layer 31 described above. In such a case, the thickness of the first resin layer 31 is preferably 10 to 500 $\mu$m, more preferably 15 to 300 $\mu$m, and even more preferably 30 to 200 $\mu$m, from the viewpoint of heat sealability, and embedding properties and insulating properties of the metal terminal.

When the terminal film 16 has a two-layer structure, the terminal film 16 may be configured such that the two-layer structure is composed of a first resin layer in contact with the packaging material 13 and a second resin layer in contact with the metal terminal 14 and that at least one of the two layers has the same configuration as the first resin layer 31 described above and the other layer has the same configuration as the second resin layer 32 or the intermediate layer 33 described above. The other layer may have a configuration different from that of the second resin layer 32 or the intermediate layer 33 described above.

The first resin layer 31 and the second resin layer 32 may have the same configuration, or may have different configurations. The second resin layer 32 may not necessarily contain polyethylene. The second resin layer 32 may not necessarily satisfy Formula (C1). The intermediate layer 33 may not necessarily contain polyethylene. The intermediate layer 33 may not necessarily satisfy Formula (B1).

Next, a method of producing the terminal film 16 of the present embodiment will be briefly described. The method of producing the terminal film 16 is not particularly limited. The terminal film 16 can be produced, for example, using a film extrusion production device including a die such as a circular die used in blown film extrusion or a T-die used in die pressing, and multilayer blown film extrusion is preferable from the viewpoint of film formation stability.

The following will describe, as an example of the method of producing the terminal film 16, a case in which the terminal film 16 is produced using blown film extrusion (in other words, a blown film extrusion apparatus).

First, the base materials of the first resin layer 31, the second resin layer 32, and the intermediate layer 33 are prepared. Next, the base materials of the first resin layer 31, the second resin layer 32, and the intermediate layer 33 are supplied to a blown film extrusion apparatus. Then, while the three base materials are extruded as a laminate having a three-layer structure (a structure in which the first resin layer 31, the second resin layer 32 and the intermediate layer 33 are laminated) from an extrusion portion of the blown film extrusion apparatus, air is supplied inside the extruded laminate having a three-layer structure.

While the terminal film 16 blown into a cylindrical shape is conveyed, the terminal film 16 is deformed into a flat shape by a guide portion, and then the terminal film 16 is folded into a sheet form by a pair of pinch rolls. Both ends of the folded tube are slit, and a pair of films (two strips of film) are wound in a roll form around a winding core, thereby producing the terminal film 16 in a roll form.

The extrusion temperature at which the terminal film 16 is produced is preferably, for example, in the range of 130 to 300°C, and more preferably in the range of 130 to 250°C. If the extrusion temperature is below 130°C, insufficient melting of the resins constituting the layers leads to significantly high melt viscosity, and this may cause unstable screw extrusion. On the other hand, if the extrusion temperature exceeds 300°C, severe oxidation or degradation of the resins constituting the layers leads to lower quality of the terminal film 16.

The screw rotational speed, blow ratio, take-up speed, and the like can be appropriately determined considering the film thickness that has been set. The thickness ratio of the layers of the terminal film 16 can be easily adjusted by changing the screw rotational speed.

The terminal film 16 of the present embodiment may be produced through dry lamination using an adhesive or sandwich lamination of prepared insulating layers (insulating films).

A sealing process in which the terminal film 16 and the metal terminal 14 of the present embodiment are melted and adhered to each other will be described with reference to Fig. 3. In the sealing process, the terminal film 16 and the metal terminal 14 are heat sealed to each other by heating and melting the second resin layer 32 while simultaneously applying pressure so that the second resin layer 32 is in close contact with the metal terminal 14.

In the sealing process, in order to obtain sufficient adhesion and sealing properties between the terminal film 16 and the metal terminal 14, the terminal film 16 is heated to a temperature higher than or equal to the melting point of the resin constituting the second resin layer.

Specifically, the terminal film 16 may be heated, for example, at a heating temperature of 140 to 170°C. Furthermore, the processing time (sum of the heating time and the pressing time) needs to be determined considering peel strength and productivity. The processing time can be appropriately set, for example, in the range of 1 to 60 seconds.

When the production tact (productivity) of the terminal film 16 is prioritized, heat sealing may be performed at a temperature above 170°C for a short pressing time. In such a case, the heating temperature may be, for example, 170 to 230°C, and the pressing time may be, for example, 3 to 20 seconds.

The present disclosure will be more specifically described below by way of examples and comparative examples; however, the present disclosure is not limited to the following examples.

[Preparation of terminal film]

(Example 1)

The components of a resin layer shown in Table 1 were dry-blended to prepare a base material of the resin layer.

Then, the base material was extruded at a melting temperature of 210°C using a blown film extrusion production apparatus (type Co-OI) manufactured by Sumitomo Heavy Industries Modern, Ltd., thereby obtaining a terminal film composed of a single resin layer having a thickness of 100 μm.

(Examples 2 to 26 and Comparative Examples 1 and 2)

The components of resin layers and an insulating layer shown in Tables 1 to 3 were dry-blended to prepare base materials of the resin layers and a base material of the insulating layer. Then, the base material of the resin layer (first resin layer), the base material of the insulating layer (intermediate layer), and the base material of the resin layer (second resin layer) were placed in a blown film extrusion production apparatus (type Co-OI) manufactured by Sumitomo Heavy Industries Modern, Ltd., and the three base materials were extruded using the film extrusion production apparatus, thereby preparing a terminal film having a three-layer structure composed of the first resin layer, the insulating layer, and the second resin layer. The melting temperature of the base materials was 210°C. In the examples and the comparative examples, the thicknesses of the first resin layer (packaging material side), the insulating layer, and the second resin layer (lead side) were as follows.

$$20 \text{ μm}/40 \text{ μm}/20 \text{ μm}$$

In Tables 1 to 3, "PE-butylene" indicates an ethylene-ethylene-butylene block copolymer. Furthermore, "PE-butylene random" indicates an ethylene-butylene random copolymer.

[Drop test]

(Examples 2 to 26 and Comparative Examples 1 and 2)

(1) Preparation of tab

A lead having a width of 5 mm, a length of 30 mm, and a thickness of 100 μm was used. Aluminum was used as the material of a positive electrode, and nickel was used as the material of a negative electrode. Both the positive and negative electrodes were subjected to non-chromium surface treatment. From the terminal film, a piece having a width of 15 mm and a length of 10 mm was cut out and used as a terminal film piece. A terminal film piece, the lead, and a terminal film piece were laminated in this order, and sealed at a sealing temperature of 165°C for a sealing time of 10 seconds. Thus, a positive electrode tab and a negative electrode tab were obtained.

(2) Preparation of packaging material

A laminate was prepared in which a PET film (thickness: 25 μm), a polyester polyol adhesive (thickness: 5 μm), and an aluminum foil (thickness: 40 μm; A8079-O) were laminated in this order. Both surfaces of the aluminum foil were subjected to non-chromium surface treatment. Then, the components shown in Tables 1 to 3 were dry-blended to prepare a base material of a sealant layer. Acid-modified polypropylene (thickness: 40 μm) and the base material of the sealant layer (thickness: 40 μm) were coextruded at a melting temperature of 210°C using a T-die extrusion production apparatus manufactured by Sumitomo Heavy Industries Modern, Ltd., thereby obtaining a packaging material. In the coextrusion, acid-modified polypropylene was extruded onto the surface of the laminate on the aluminum foil side.

(3) Preparation of battery pack

A packaging material having a size of 50 mm × 90 mm was prepared, and the long sides of the packaging material were folded in two. Then, one of the sides of the packaging material having a width of 45 mm was heat sealed while the positive electrode tab and the negative electrode tab were held by the packaging material. The side was heat sealed at 190°C for 5 seconds. The remaining two sides of the packaging material with no tab were heat sealed at 190°C for 3 seconds. First, the side of the packaging material facing the folded side was heat sealed. Then, the packaging material was filled with 5 g of mixed solution (dimethyl carbonate : diethyl carbonate : ethylene carbonate = 1: 1: 1 (weight ratio)), and finally, the side of the packaging material facing the tab was heat sealed. Thus, a battery pack for tab evaluation was prepared in which no battery element (e.g., current collector) was enclosed. The conditions for battery pack preparation described above are more severe than the conditions for an actual battery production process in terms of heating temperature and heat-sealing time.

(4) Evaluation of safety

Each battery pack was dropped from a height of 3 m at room temperature. The battery pack after dropping was checked for the presence or absence of liquid leakage. Under the same conditions, 50 battery packs were evaluated according to the following evaluation criteria. The results are shown in Tables 1 to 3.

A: The number of battery packs with liquid leakage was 2 or less.

B: The number of battery packs with liquid leakage was 3 or more and 5 or less.

C: The number of battery packs with liquid leakage was 6 or more and 9 or less.

D: The number of battery packs with liquid leakage was 10 or more.

[Measurement of absorption intensity by infrared spectroscopy]

<First resin layer>

(Example 1)

The terminal film was cut to obtain a measurement sample (size: 20 mm × 20 mm). On the outermost surface of the measurement sample, the absorption intensity of the infrared absorption spectrum (wave number: 720 cm$^{-1}$ and 841 cm$^{-1}$) was measured by attenuated total reflection Fourier transform infrared spectroscopy (ATR-FTIR). The measurement device and conditions were as follows. From the measurement results, (a2/a1) in Formula (A1) was calculated. The results are shown in Tables 1 to 3.

{Measurement device and conditions}

Measurement device: Spectrum Spotlight 400 (trade name, manufactured by PerkinElmer)

Prism: Germanium

Wave number resolution: 4 cm$^{-1}$

Integration count: 4 times

Baseline: Average transmittance at a wave number of 2000 to 2300 cm$^{-1}$

Absorption intensity at a wave number of 720 cm$^{-1}$ and 841 cm$^{-1}$: Difference between the baseline and the transmittance at a wave number of 720 cm$^{-1}$ and 841 cm$^{-1}$

(Examples 2 to 26 and Comparative Examples 1 and 2)

A measurement sample was obtained in the same manner as Example 1. On the outermost surface of the measurement sample on the first resin layer side, the absorption intensity of the infrared absorption spectrum was measured in the same manner as in Example 1. From the measurement results, (a2/a1) in Formula (A1) was calculated. The results are shown in Tables 1 to 3.

<Intermediate layer>

(Examples 2 to 26 and Comparative Examples 1 and 2)

A measurement sample was obtained in the same manner as in the measurement of the absorption intensity in the first resin layer. Furthermore, the sample was cut from a surface layer toward the opposite surface layer using a microtome to reveal a cross section and expose the intermediate layer. In the intermediate layer, the absorption intensity of the infrared absorption spectrum was measured using microscopic ATR. The measurement device and conditions were the same as those for the measurement in the first resin layer. From the measurement results, (b2/b1) in Formula (B1) was calculated. The results are shown in Tables 1 to 3.

<Second resin layer>

(Examples 2 to 26 and Comparative Examples 1 and 2)

A measurement sample was obtained in the same manner as in the measurement of the absorption intensity in the first resin layer. The absorption intensity of the infrared absorption spectrum was measured on the outermost surface of the measurement sample on the second resin layer side. The measurement device and conditions were the same as those for the measurement in the first resin layer. From the measurement results, (c2/c1) in Formula (C1) was calculated. The results are shown in Tables 1 to 3.

<Sealant layer>

(Examples 1 to 26 and Comparative Examples 1 and 2)

A packaging material was prepared in the same manner as in "(2) Preparation of packaging material" in the drop test. The packaging material was cut to obtain a measurement sample (size: 20 mm × 20 mm). The absorption intensity of the infrared absorption spectrum was measured on the outermost surface of the sealant layer of the measurement sample. The measurement device and conditions were the same as those for the measurement in the first resin layer. From the measurement results, (d2/d1) in Formula (D1) was calculated. The results are shown in Tables 1 to 3.

[Table 1]

| | Terminal film | | | | | | Packaging material | | Evaluation results | |
| --- | --- | --- | --- | --- | --- | --- | --- | --- | --- | --- |
| | First resin layer | | Intermediate layer | | Second resin layer | | Sealant layer | | Drop test | |
| | Composition | a2/a1 | Composition | b2/b1 | Composition | c2/c1 | Composition | d2/d1 | Liquid leakage | Evaluation |
| Example 1 | Random PP LDPE PE-butylene | 2.0 | - | - | - | - | Random PP LDPE | 2.0 | 9 | C |
| Example 2 | Random PP LDPE PE-butylene | 0.4 | Block PP LDPE | 2.3 | Random PP LDPE PE-butylene | 2.5 | Random PP LDPE | 2.0 | 7 | C |
| Example 3 | Random PP LDPE PE-butylene | 0.6 | Block PP LDPE | 2.3 | Random PP LDPE PE-butylene | 2.5 | Random PP LDPE | 2.0 | 4 | B |
| Example 4 | Random PP LDPE | 2.0 | Block PP LDPE | 2.3 | Random PP LDPE | 2.5 | Random PP LDPE | 2.0 | 5 | B |
| Example 5 | Random PP LDPE PE-butylene random | 2.0 | Block PP LDPE | 2.3 | Random PP LDPE PE-butylene random | 2.5 | Random PP LDPE | 2.0 | 3 | B |
| Example 6 | Random PP LDPE PE-butylene | 2.0 | Block PP LDPE | 2.3 | Random PP LDPE PE-butylene | 2.5 | Random PP LDPE | 2.0 | 0 | A |
| Example 7 | Random PP | 6.1 | Block PP | 2.3 | Random PP | 2.5 | Random PP | 2.0 | 6 | C |
| | LDPE PE-butylene | | LDPE | | LDPE PE-butylene | | LDPE | | | |
| Example 8 | Random PP LDPE PE-butylene | 4.0 | Block PP LDPE | 2.3 | Random PP LDPE PE-butylene | 2.5 | Random PP LDPE | 2.0 | 4 | B |
| Example 9 | Random PP LDPE PE-butylene | 2.0 | Block PP LDPE | 0.8 | Random PP LDPE PE-butylene | 2.5 | Random PP LDPE | 2.0 | 9 | C |
| Example 10 | Random PP LDPE PE-butylene | 2.0 | Block PP | 3.5 | Random PP LDPE PE-butylene | 2.5 | Random PP LDPE | 2.0 | 8 | C |

[Table 2]

| | Terminal film | | | | | | Packaging material | | Evaluation results | |
|---|---|---|---|---|---|---|---|---|---|---|
| | First resin layer | | Intermediate layer | | Second resin layer | | Sealant layer | | Drop test | |
| | Composition | a2/a1 | Composition | b2/b1 | Composition | c2/c1 | Composition | d2/d1 | Liquid leakage | Evaluation |
| Example 11 | Random PP LDPE PE-butylene | 2.0 | Block PP LDPE | 1.0 | Random PP LDPE PE-butylene | 2.5 | Random PP LDPE | 2.0 | 5 | B |
| Example 12 | Random PP LDPE PE-butylene | 2.0 | Block PP LDPE | 1.7 | Random PP LDPE PE-butylene | 2.5 | Random PP LDPE | 2.0 | 2 | A |
| Example 13 | Random PP LDPE PE-butylene | 2.0 | Block PP LDPE | 2.8 | Random PP LDPE PE-butylene | 2.5 | Random PP LDPE | 2.0 | 3 | B |
| Example 14 | Random PP LDPE PE-butylene | 2.0 | Block PP LDPE | 3.2 | Random PP LDPE PE-butylene | 2.5 | Random PP LDPE | 2.0 | 5 | B |
| Example 15 | Random PP LDPE PE-butylene | 2.0 | Block PP LDPE | 2.3 | Random PP LDPE PE-butylene | 0.8 | Random PP LDPE | 2.0 | 8 | C |
| Example 16 | Random PP LDPE PE-butylene | 2.0 | Block PP LDPE | 2.3 | Random PP LDPE PE-butylene | 6.0 | Random PP LDPE | 2.0 | 8 | C |
| Example 17 | Random PP LDPE PE-butylene | 2.0 | Block PP LDPE | 2.3 | Random PP LDPE PE-butylene | 1.1 | Random PP LDPE | 2.0 | 5 | B |
| Example 18 | Random PP LDPE PE-butylene | 2.0 | Block PP LDPE | 2.3 | Random PP LDPE PE-butylene | 1.6 | Random PP LDPE | 2.0 | 2 | A |
| Example 19 | Random PP LDPE PE-butylene | 2.0 | Block PP LDPE | 2.3 | Random PP LDPE PE-butylene | 3.5 | Random PP LDPE | 2.0 | 2 | A |

[Table 3]

| | Terminal film | | | | | | Packaging material | | Evaluation results | |
| --- | --- | --- | --- | --- | --- | --- | --- | --- | --- | --- |
| | First resin layer | | Intermediate layer | | Second resin layer | | Sealant layer | | Drop test | |
| | Composition | a2/a1 | Composition | b2/b1 | Composition | c2/c1 | Composition | d2/d1 | Liquid leakage | Evaluation |
| Example 20 | Random PP LDPE PE-butylene | 2.0 | Block PP LDPE | 2.3 | Random PP LDPE PE-butylene | 5.6 | Random PP LDPE | 2.0 | 4 | B |
| Example 21 | Random PP LDPE PE-butylene | 2.0 | Block PP LDPE | 2.3 | Random PP LDPE PE-butylene | 2.5 | Random PP LDPE | 0.6 | 8 | C |
| Example 22 | Random PP LDPE PE-butylene | 2.0 | Block PP LDPE | 2.3 | Random PP LDPE PE-butylene | 2.5 | Random PP LDPE | 8.8 | 7 | C |
| Example 23 | Random PP LDPE PE-butylene | 2.0 | Block PP LDPE | 2.3 | Random PP LDPE PE-butylene | 2.5 | Random PP LDPE | 0.8 | 5 | B |
| Example 24 | Random PP LDPE PE-butylene | 2.0 | Block PP LDPE | 2.3 | Random PP LDPE PE-butylene | 2.5 | Random PP LDPE | 1.5 | 2 | A |
| Example 25 | Random PP LDPE PE-butylene | 2.0 | Block PP LDPE | 2.3 | Random PP LDPE PE-butylene | 2.5 | Random PP LDPE | 3.5 | 3 | B |
| Example 26 | Random PP LDPE PE-butylene | 2.0 | Block PP LDPE | 2.3 | Random PP LDPE PE-butylene | 2.5 | Random PP LDPE | 8.4 | 5 | B |
| Comparative Example1 | Random PP LDPE PE-butylene | 0.2 | Block PP LDPE | 2.3 | Random PP LDPE PE-butylene | 2.5 | Random PP LDPE | 2.0 | 21 | D |
| Comparative Example2 | Random PP LDPE PE-butylene | 6.5 | Block PP LDPE | 2.3 | Random PP LDPE PE-butylene | 2.5 | Random PP LDPE | 2.0 | 22 | D |

The present disclosure can be summarized as in the following [1] to [9].

[1] A power storage device terminal film for covering an outer peripheral surface of part of a metal terminal constituting a power storage device, the power storage device terminal film containing

polypropylene and polyethylene, wherein
the terminal film has a first surface satisfying Formula (A1):

$$0.3 \leq a2/a1 \leq 6.2 \ (A1),$$

where a1 represents an absorption intensity at a wave number of 720 cm$^{-1}$ measured by attenuated total reflection infrared spectroscopy, and a2 represents an absorption intensity at a wave number of 841 cm$^{-1}$ measured by attenuated total reflection infrared spectroscopy.

[2] The power storage device terminal film according to [1], including a compatibilizer that has a portion compatible with the polypropylene and a portion compatible with the polyethylene.
[3] The power storage device terminal film according to [2], wherein the compatibilizer is a block copolymer or a graft copolymer.
[4] A power storage device terminal film for covering an outer peripheral surface of part of a metal terminal constituting a power storage device, the power storage device terminal film including:

a first resin layer that contains polypropylene and polyethylene;
a second resin layer that contains polypropylene; and
an intermediate layer that contains polypropylene and is provided between the first resin layer and the second resin layer, wherein
the first resin layer has, as one surface of the terminal film, a first surface satisfying Formula (A1):

$$0.3 \leq a2/a1 \leq 6.2 \ (A1),$$

where a1 represents an absorption intensity at a wave number of 720 cm$^{-1}$ measured by attenuated total reflection infrared spectroscopy, and a2 represents an absorption intensity at a wave number of 841 cm$^{-1}$ measured by attenuated total reflection infrared spectroscopy.

[5] The power storage device terminal film according to [4], wherein the intermediate layer satisfies Formula (B1):

$$1.0 \leq b2/b1 \leq 3.2 \ (B1)$$

[In Formula (B1), b1 represents an absorption intensity at a wave number of 720 cm$^{-1}$ measured by attenuated total reflection infrared spectroscopy, and b2 represents an absorption intensity at a wave number of 841 cm$^{-1}$ measured by attenuated total reflection infrared spectroscopy.]
[6] The power storage device terminal film according to [4] or [5], wherein the second resin layer satisfies Formula (C1):

$$1.0 \leq c2/c1 \leq 5.8 \ (C1)$$

[In Formula (C1), c1 represents an absorption intensity at a wave number of 720 cm$^{-1}$ measured by attenuated total reflection infrared spectroscopy, and c2 represents an absorption intensity at a wave number of 841 cm$^{-1}$ measured by attenuated total reflection infrared spectroscopy.]
[7] The power storage device terminal film according to any one of [4] to [6], wherein the first resin layer contains a compatibilizer that has a portion compatible with the polypropylene and a portion compatible with the polyethylene.
[8] The power storage device terminal film according to [7], wherein the compatibilizer is a block copolymer or a graft copolymer.
[9] A power storage device including: a power storage device body;

a metal terminal that is electrically connected to the power storage device body;
a packaging material that holds the metal terminal and houses the power storage device body; and
the power storage device terminal film according to any one of [1] to [7] that is disposed between the metal terminal and the packaging material so as to cover an outer peripheral surface of part of the metal terminal, wherein the packaging material includes a sealant layer that contains polypropylene,
the terminal film is disposed so that the first surface is in contact with the sealant layer, and
the sealant layer satisfies Formula (D1):

$$0.8 \leq d2/d1 \leq 8.5 \ (D1),$$

where d1 represents an absorption intensity at a wave number of 720 cm$^{-1}$ measured by attenuated total reflection infrared spectroscopy, and d2 represents an absorption intensity at a wave number of 841 cm$^{-1}$ measured by attenuated total reflection infrared spectroscopy.

[Reference Signs List]

| | |
|---|---|
| 10 | Power storage device |
| 13 | Packaging material |
| 14 | Metal terminal (tab lead) |
| 21 | Sealant layer |
| 31, 32 | Resin layer |
| 33 | Intermediate layer |

**Claims**

1.

A power storage device terminal film for covering an outer peripheral surface of part of a metal terminal constituting a power storage device, the power storage device terminal film comprising
polypropylene and polyethylene, wherein
the terminal film has a first surface satisfying Formula (A1):

$$0.3 \leq a2/a1 \leq 6.2 \ (A1),$$

where a1 represents an absorption intensity at a wave number of 720 cm$^{-1}$ measured by attenuated total reflection infrared spectroscopy, and a2 represents an absorption intensity at a wave number of 841 cm$^{-1}$ measured by attenuated total reflection infrared spectroscopy.

2. The power storage device terminal film according to claim **1,** comprising
a compatibilizer that has a portion compatible with the polypropylene and a portion compatible with the polyethylene.

3. The power storage device terminal film according to claim 2, wherein
the compatibilizer is a block copolymer or a graft copolymer.

4. A power storage device terminal film for covering an outer peripheral surface of part of a metal terminal constituting a power storage device, the power storage device terminal film comprising:

a first resin layer that contains polypropylene and polyethylene;
a second resin layer that contains polypropylene; and
an intermediate layer that contains polypropylene and is provided between the first resin layer and the second resin layer, wherein
the first resin layer has, as one surface of the terminal film, a first surface satisfying Formula (A1):

$$0.3 \leq a2/a1 \leq 6.2 \ (A1),$$

where a1 represents an absorption intensity at a wave number of 720 cm$^{-1}$ measured by attenuated total reflection infrared spectroscopy, and a2 represents an absorption intensity at a wave number of 841 cm$^{-1}$ measured by attenuated total reflection infrared spectroscopy.

5. The power storage device terminal film according to claim 4, wherein

the intermediate layer satisfies Formula (B1):

$$1.0 \leq b2/b1 \leq 3.2 \ (B1),$$

where b1 represents an absorption intensity at a wave number of 720 cm$^{-1}$ measured by attenuated total reflection infrared spectroscopy, and b2 represents an absorption intensity at a wave number of 841 cm$^{-1}$ measured by attenuated total reflection infrared spectroscopy.

6. The power storage device terminal film according to claim 4 or 5, wherein

the second resin layer satisfies Formula (C1):

$$1.0 \leq c2/c1 \leq 5.8 \ (C1),$$

where c1 represents an absorption intensity at a wave number of 720 cm$^{-1}$ measured by attenuated total reflection infrared spectroscopy, and c2 represents an absorption intensity at a wave number of 841 cm$^{-1}$ measured by attenuated total reflection infrared spectroscopy.

7. The power storage device terminal film according to any one of claims 4 to 6, wherein
the first resin layer contains a compatibilizer that has a portion compatible with the polypropylene and a portion compatible with the polyethylene.

8. The power storage device terminal film according to claim 7, wherein
the compatibilizer is a block copolymer or a graft copolymer.

9. A power storage device comprising:

a power storage device body;
a metal terminal that is electrically connected to the power storage device body;
a packaging material that holds the metal terminal and houses the power storage device body; and
the power storage device terminal film according to any one of claims 1 to 8 that is disposed between the metal terminal and the packaging material so as to cover an outer peripheral surface of part of the metal terminal, wherein
the packaging material includes a sealant layer that contains polypropylene,
the terminal film is disposed so that the first surface is in contact with the sealant layer, and
the sealant layer satisfies Formula (D1):

$$0.8 \leq d2/d1 \leq 8.5 \ (D1),$$

where d1 represents an absorption intensity at a wave number of 720 cm$^{-1}$ measured by attenuated total reflection infrared spectroscopy, and d2 represents an absorption intensity at a wave number of 841 cm$^{-1}$ measured by attenuated total reflection infrared spectroscopy.

FIG.1

FIG. 2

13

FIG.3

## INTERNATIONAL SEARCH REPORT

| International application No. |
| --- |
| **PCT/JP2023/020831** |

**A. CLASSIFICATION OF SUBJECT MATTER**

*H01M 50/178*(2021.01)i; *H01M 50/105*(2021.01)i; *H01M 50/121*(2021.01)i; *H01M 50/131*(2021.01)i;
*H01M 50/184*(2021.01)i; *H01M 50/193*(2021.01)i; *H01M 50/197*(2021.01)i
FI: H01M50/178; H01M50/105; H01M50/121; H01M50/131; H01M50/184 C; H01M50/193; H01M50/197

According to International Patent Classification (IPC) or to both national classification and IPC

**B. FIELDS SEARCHED**

Minimum documentation searched (classification system followed by classification symbols)

H01M50/178; H01M50/105; H01M50/121; H01M50/131; H01M50/184; H01M50/193; H01M50/197

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2015/186733 A1 (UNITIKA LTD.) 10 December 2015 (2015-12-10) paragraphs [0009], [0062], [0065] | 1-9 |
| A | JP 2019-003950 A (DAINIPPON PRINTING CO LTD) 10 January 2019 (2019-01-10) paragraphs [0009], [0022], [0051] | 1-9 |
| A | WO 2019/107302 A1 (DENKA COMPANY LIMITED) 06 June 2019 (2019-06-06) paragraphs [0003], [0021], [0033] | 1-9 |
| P, A | WO 2022/211081 A1 (TOAGOSEI CO LTD) 06 October 2022 (2022-10-06) | 1-9 |

☐ Further documents are listed in the continuation of Box C.　☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **04 August 2023** | **15 August 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/020831**

| Patent document cited in search report | | | Publication date (day/month/year) | Patent family member(s) | | | Publication date (day/month/year) |
|---|---|---|---|---|---|---|---|
| WO | 2015/186733 | A1 | 10 December 2015 | CN | 106459524 | A | |
| | | | | KR | 10-2017-0013210 | A | |
| JP | 2019-003950 | A | 10 January 2019 | CN | 108886117 | A | |
| | | | | KR | 10-2019-0089930 | A | |
| | | | | CN | 110808342 | A | |
| | | | | WO | 2018/110702 | A1 | |
| WO | 2019/107302 | A1 | 06 June 2019 | US | 2021/0245484 | A1 | |
| | | | | paragraphs [0005], [0042], [0063] | | | |
| | | | | EP | 3718770 | A1 | |
| | | | | CN | 111386197 | A | |
| | | | | KR | 10-2020-0086712 | A | |
| WO | 2022/211081 | A1 | 06 October 2022 | (Family: none) | | | |

Form PCT/ISA/210 (patent family annex) (January 2015)

**EP 4 539 217 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022008803 A